# EUROPEAN PATENT SPECIFICATION

(11) **EP 1 059 106 B1**
(45) Date of publication and mention of the grant of the patent: **04.08.2004**
(21) Application number: 99650109.4
(22) Date of filing: 16.11.1999
(51) Int. Cl.: B01D 39/16

(54) **Device and method for the manufacture of a filtering material**
Vorrichtung und Verfahren zur Herstellung eines Filtermaterials
Dispositif et procédé de fabrication d'un matériau filtrant

(30) Priority: 07.06.1999 US 326559
(43) Date of publication of application: 13.12.2000
(73) Proprietor: Nicast Ltd., 23513, Migdal Haemek (IL)
(72) Inventor: Dubson, Alexander, 23513 Migdal HaEmeck (IL)
(74) Representative: Schmitz, Jean-Marie

(56) References cited:
- DE-A- 3 035 039
- US-A- 4 043 331
- US-A- 4 143 196
- US-A- 4 874 659
- US-A- 5 240 479

## Description

### FIELD AND BACKGROUND OF THE INVENTION

The present invention is related to filtering means, in particular to composite polymeric fiber filters, and to the technology for their manufacture.

The creation of filtering materials capable of trapping particles of 0.1-10 microns in size and their increasing use is related to increasingly stringent requirements for quality and reliability of manufactured commodities, as well as to the rapid development of modern technology and production processes, such as, but not limited to, electronics, aviation, automobile industry, electrochemical industry, biotechnology, medicine, etc.

The main industrial manufacturing methods for such materials include production from polymer solutions (V. P. Dubyaga et al., *Polymer Membranes,* "Chemistry" Publishing House, Moscow, 1981 (in Russian); V. E. Gul and V. P. Dyakonova, *Physical and Chemical Principles of Polymer Films Manufacture,* "Higher School Publishing House, Moscow, 1978 (in Russian); German patent DE 3,023,788, "Cationic absorbent for removing acid dyes etc. From waste water - prepared from aminoplast precondensate and amine-amide compound"), from powders and powder polymer composites (P. B. Zhivotinskiy, *Porous Partitions and Membranes in Electrochemical Equipment,* "Chemistry" Publishing House, Leningrad, 1978 (in Russian); *Encyclopedia of Polymer Science and Engineering,* Wiley, New York, 1987, Vol. 8 p. 533), from macromonolithic films (I. Cabasso and A. F. Turbak, "Synthetic membranes", Vol. 1, *ACS Symposium, Ser. 154,* Washington DC, 1981, p. 267), and from fibers and dispersions of fibrous polymers (T. Miura, "Totally dry unwoven system combines air-laid and thermobonding technology", *Unwoven World* Vol. 73 (March 1988) p.46). The latter method is the most widespread, since it facilitates the manufacture of materials with the optimal cost-quality ratio.

Great interest is also being expressed in the extension of the traditional uses of filtering materials, especially to combination functions of trapping micro-particles in gaseous and liquid media with the adsorption of molecular admixtures, for example, in the removal of mercaptans, as substrate for catalytic reactions, in the enhancement of the bactericidal effect of the filtering material, etc. Fulfillment of these additional functions is possible due to the introduction into the fiber matrix of fillers of some sort or functional groups giving the formation of additional solid phase, i.e., as a result of manufacturing of composite filtering materials.

At present, high efficiency polymeric filtering materials are manufactured from synthetic fibers by means of a technology that is similar in many aspects to the traditional technology applied in the pulp and paper industry. A long fiber thread is cut into pieces of a given length, which are then subjected to some basic and supplementary operations out of more than 50 possibilities, which may include chemical processing for modification of surface properties, mixing with binding and stabilizing compositions, calendaring, drying process, etc. (O. I. Nachinkin, *Polymer Microfilters*, "Chemistry" Publishing House, Moscow, 1985 (in Russian), pp. 157-158). The complexity of such a technological process hampers the manufacture of materials with stable characteristics for subsequent exploitation; results in the high cost of manufactured filtering materials; and practically excludes the manufacture of composites with fillers sensitive to moist, thermal processing.

Low efficiency filtering materials (class ASHRAE) are manufactured by melt blow or spun-bonded processes.

There is, however, a method for the manufacture of ultra-thin synthetic fibers (and devices for their production), which facilitates the combination of the process of fiber manufacture with the formation of a microporous filtering material, and thus reduces the number of technological operations, precludes the necessity for aqueous reaction media, and increases the stability of properties of the product being manufactured (see, for example, U.S. Pat. No. 2,349,950). According to this method, known as "electrocapillary spinning", fibers of a given length are formed during the process of polymer solution flow from capillary apertures under electric forces and fall on a receptor to form an unwoven polymer material, the basic properties of which may be effectively changed.

With this method, fiber formation takes place in the gaps between each capillary, being under negative potential, and a grounded anti-electrode in the form of a thin wire, i.e., in the presence of a heterogeneous field, being accompanied by corona discharge. However, the process of solvent evaporation takes place very rapidly, and as a result the fiber is subjected to varying electric and aerodynamic forces, which leads to anisotropy along the fiber width and formation of short fibers.

Manufacture of high-quality filtering materials from such fibers is thus impossible because the electric charge of the fibers is low, such that the process of forming the filtering material is not controlled by electrical force and consequently the filtering material is not uniform.

Exploitation of a device for executing the method described above is complicated by a number of technological difficulties:
1. Capillary apertures become blocked by polymer films that form under any deviation from the technological process conditions - concentration and temperature of solution, atmospheric humidity, intensity of electric field, etc.
2. The presence of a large number of such formations leads to a complete halt of the technological process or drops form as a consequence of the rupture of the aforementioned films.
3. The presence of high intensity electric field in the area of the precipitation electrode limits the productivity of the method.

Therefore, the manufacture of synthetic fibers by this method is possible from only a very limited number of polymers, for example, cellulose acetate and low molecular weight polycarbonate, which are not prone to the defects described above.

It is necessary to take into account the fact that such an important parameter of filtering materials as monodispersity of the pores (and the resultant separation efficiency of the product) has, in this case, a weak dependency on fiber characteristics and is largely determined by the purely probabilistic process of fiber stacking.

Modern filtering materials are subject to strict, frequently contradictory, requirements. In addition to high efficiency of separation of heterogeneous liquid and gas systems, they are required to provide low hydro- (or aero-) dynamic resistance of the filter, good mechanical strength and technical properties (e.g., pleatability), chemical stability, good dirt absorption capacity, and universality of application, together with low cost.

The manufacture of such products is conditional on the use of high-quality long and thin fibers with an isometric cross-section, containing monodispersed pores and exhibiting high porosity. The practical value of this product may be greatly increased as possible applications are expanded due to the formation of additional phases, i.e., in the manufacture of the above-mentioned composite filtering materials.

At present there is a high demand to high efficiency particulate air (HEPA) filters which are defined as capable of filtering out 99.97 % of 0.3 µm particulates in air flowing at 5 cm/s. Such a requirement is met, for example, by glass-fiber based filters, however on the expense of a high pressure drop, in a range of 30 - 40 mm H₂O.

U.S. Pat. Nos. 4,874,659 and 4,178,157 both teach high efficiency particulate air filters capable of filtering out 99.97 % of 0.3 µm particulates in air flowing at 5 cm/s (sec), characterized by lower pressure drop in a range of 5-10 mm H₂O. These filters are made of nonwoven web (4,874,659) or sliced films (4,178,157) made of polyolefines, such as polyethylene or polypropylene, which are partially melted by heating to about 100 °C and are thereafter subjected to an immense electrical field which electrically charges the polymer. The result is a filter media, characterized by thick fibers (10 - 200 µm) in diameter, low porosity and being electrically charged. The latter property, provides these filters with the high efficiency particulate air (HEPA) qualities. However, such filters suffer few limitations. First, being based on the electrical charge for effective capture of particulates, the performances of such filters are greatly influenced by air humidity, causing charge dissipation. Second, due to their mode of action and to being relatively thin, such filters are characterized by low dust load (the weigh of dust per area of filter causing a two fold increase in pressure drop) per filter weight per area ratio of about 0.8, wherein typically the dust load of such filters is about 50-80 g/m² and their weight per area is about 80-130 g/m².

U.S.-A-4,043,331 discloses a product comprising a mat of fibers prepared by electrostatically spinning an organic material and collecting the spun fibers on a suitable receiver. U.S.-A-4,143,196 teaches a fiber filter made by spraying liquid fiber electrostatically and depositing the fiber fleece on a conductive support.

Therefore, the main objective of the proposed technical solution is removal of the above-listed defects of known solutions for filtering applications (primarily directed at the manufacture of microfilters from polymer fibers) and other purposes, including application as micro-filtering means, i.e., the creation of means and the meeting of the above-listed requirements for technical means for the manufacture of micro-filtering materials with new consumer properties.

### SUMMARY OF THE INVENTION

According to one aspect of the present invention there is provided a device for transforming a liquefied polymer into a fiber structure as defined in appended claim 1, including (a) a substantially planar precipitation electrode; (b) a first mechanism for charging the liquefied polymer to a first electrical potential relative to the precipitation electrode; (c) a second mechanism for forming a surface on the liquefied polymer of sufficiently high curvature to cause at least one jet of the liquefied polymer to be drawn by the first electrical potential to the precipitation electrode; wherein the first and second mechanisms are designed such that when a plurality of fibers are precipitated on the precipitation electrode, a high efficiency particulate air unwoven fiber structure, capable of filtering out 99.97 % of 0.3 µm particulates in air flowing at 5 cm/s is obtainable, and characterized in that it further comprises (d) an aerosol generator operative to supply an aerosol to said precipitation electrode at a second electrical potential difference from said precipitation electrode opposite in sign to said first electrical potential difference.

According to further features in preferred embodiments of the invention described below, the first mechanism for charging the liquefied polymer to a first electrical potential relative to the precipitation electrode includes in combination (i) a source of high voltage; and (ii) a charge control agent mixed with the liquefied polymer.

According to still further features in the described preferred embodiments the first mechanism for charging the liquefied polymer to a first electrical potential relative to the precipitation electrode further includes (iii) a source of ionized air being in contact with the liquefied polymer.

According to still further features in the described preferred embodiments the second mechanism is effected by at least one rotating wheel having a rim formed with a plurality of protrusions.

According to still further features in the described preferred embodiments each of the protrusions is formed with a liquefied polymer collecting cavity.

According to still further features in the described preferred embodiments each of the at least one wheel is tilted with respect to the precipitation electrode.

According to still further features in the described preferred embodiments each of the at least one wheel includes a dielectric core.

According to still further features in the described preferred embodiments the second mechanism is effected by a gas bubbles generating mechanism.

According to still further features in the described preferred embodiments the second mechanism is effected by a rotating strap formed with a plurality of protrusions.

The basic device of the present invention includes a grounded moving belt that acts as a precipitation electrode, and an electrode-collector for charging a polymer solution negatively with respect to the moving belt and for producing areas of high surface curvature in the polymer solution.

In one embodiment of the device, the areas of high surface curvature are formed by forcing the polymer solution through a bank of nozzles. The nozzles of the electrode-collector are inserted lengthwise in cylindrical holes sited at intervals in a negatively charged cover plate of the electrode-collector. The source of solvent vapors is connected to the holes. In an alternative configuration, the nozzles are connected by a system of open channels to the solvent vessel.

In one of the implementations, the device is provided with an additional grounded electrode (or alternatively an under potential electrode, of the same polarity of the high voltage electrode, but with lower voltage) which is placed in parallel to the surface of the nozzles of the electrode-collector and which is able to move in the direction normal to the plane of the electrode-collector's nozzles.

In order to improve the manufacturing process, the additional electrode may take the form of a single wire stretched over the inter-electrode space.

The additional electrode may also take the form of a perforated plate with flange, in which case the surface of the additional electrode, the flange, and the electrode-collector form a closed cavity, and the apertures of the perforated plate are co-axial to the apertures of electrode-collector.

The device of the present invention also includes an aerosol generator, made in the form of a hollow apparatus (fluidized bed layer) divided into two parts by a porous electro-conducting partition, which is connected to a mainly positive high-voltage source. The lower part of the cavity forms a pressure chamber, which is connected to a compressor, and the upper part of the cavity is filled with the dispersible filler, for example, polymer powder.

Alternatively, the aerosol generator may be made in the form of a slot sprayer, connected to a positive high-voltage source and a dry fluid feeder, provided with an ejector for supplying powder to the sprayer.

Secondly, the objective put forward in the current invention is obtained by the suggested method of manufacturing of a composite filtering material, stipulating the operations (stages) defined in appended claim 14.

Thus, according to another to the present invention there is provided a method for forming a polymer into a high efficiency particulate air unwoven fiber structure capable of filtering out 99.97 % of 0.3 µm particulates in air flowing at 5 cm/s, comprising the steps of (a) liquefying the polymer, thereby producing a liquefied polymer; (b) supplementing the liquefied polymer with a charge control agent; (c) providing a precipitation electrode; (d) charging the liquefied polymer to a first electrical potential relative to the precipitation electrode; (e) forming a surface on the liquefied polymer of sufficiently high curvature to cause at least one jet of the liquefied polymer to be drawn to the precipitation electrode by the first electrical potential difference, thereby forming the unwoven fiber structure capable of filtering out 99.97 % of 0.3 µm particulates in air flowing at 5 cm/s on the precipitation electrode; and (f) charging a filler powder to a second electrical potential relative to the collection surface, the second electrical potential being opposite in sign to the first electrical potential, thereby creating a charged filler powder; and (g) exposing the unwoven fiber structure on the precipitation electrode to the charged powder, thereby attracting the charged filler powder to the unwoven fiber structure.

According to further features in preferred embodiments of the invention described below, the liquefying is effected by dissolving the polymer in a solvent, thereby creating a polymer solution.

According to still further features in the described preferred embodiments the method further comprising the step of (f) providing vapors of the solvent proximate to the surface of high curvature.

According to still further features in the described preferred embodiments the charge control agent is selected from the group consisting of biscationic amides, phenol and uryl sulfide derivatives, metal complex compounds, triphenylmethanes, dimethylmidazole and ethoxytrimethylsians.

According to still further features in the described preferred embodiments the forming of the surface of high curvature is effected by causing the liquefied polymer to emerge from a nozzle, the surface of high curvature being a meniscus of the liquefied polymer.

According to still further features in the described preferred embodiments the forming of the surface of high curvature is effected by wetting a protrusion having a tip with the liquefied polymer, the surface of high curvature being a surface of the liquefied polymer adjacent to the tip.

According to still further features in the described preferred embodiments the method further comprising the step of (f) moving the precipitation electrode so that the unwoven fiber structure is formed on the precipitation electrode as a sheet.

According to still further features in the described preferred embodiments the method further comprising the step of (f) vibrating the surface of high curvature.

According to still further features in the described preferred embodiments the vibrating is effected at a frequency between about 5000 Hz and about 30,000 Hz.

According to still further features in the described preferred embodiments charging the liquefied polymer to a first electrical potential relative to the precipitation electrode is followed by recharging the liquefied polymer to a second electrical potential relative to the precipitation electrode, the second electrical potential is similar in magnitude, yet opposite in sign with respect to first electrical potential. Preferably the charge is oscillated between the first and second electrical potentials in a frequency of about 0.1 - 10 Hz, preferably about 1 Hz.

According to still further features in the described preferred embodiments the method further comprising the steps of (f) supplementing the liquefied polymer with an additive selected from the group consisting of a viscosity reducing additive, a conductivity regulating additive and a fiber surface tension regulating additive.

According to still further features in the described preferred embodiments the viscosity reducing additive is polyoxyalkylein, the conductivity regulating additive is an amine salt and the fiber surface tension regulating additive is a surfactant.

According to still further features in the described preferred embodiments the liquefied polymer is charged negatively relative to the precipitation electrode and wherein the charged powder is charged positively relative to the precipitation electrode.

The present invention is defined in the appended claims.

### BRIEF DESCRIPTION OF THE DRAWINGS

The invention is herein described, by way of example only, with reference to the accompanying drawings, wherein:
FIG. 1 is a schematic diagram of a device of the present invention, including two alternative electrified aerosol generators;
FIG. 2a is a top view of the electrode-collector of the device of Figure 1;
FIG. 2b is a lateral cross section of the electrode-collector of Figure 2a;
FIGs. 3 and 4 are lateral cross sections of alternative nozzle-based electrode-collectors;
FIG. 5 is a lateral cross section of an electrode-collector based on a rotating wheel;
FIG. 6 is a lateral cross section of an electrode-collector based on reciprocating needles;
FIG. 7 is an electron micrograph of a filter according to the present invention;
FIG. 8 is a cross section of a preferred embodiment of the device according to the present invention, adapted for manufacturing a a layered filter having a support layer and a prefilter layer surrounding a middle layer of high efficiency particulate air filter;
FIG. 9a is a cross section of a preferred embodiment of the device according to the present invention, including an air ionizer to increase the charging of the liquefied polymer and thereby to enable more homogenic precipitation thereof on a precipitation electrode;
FIG. 9b is an enlarged view of circle I of Figure 9a, showing an air ionizer in greater detail;
FIG. 10 is a cross section of a mechanism for forming a surface on the liquefied polymer of sufficiently high curvature to cause at least one jet of the liquefied polymer to be drawn to the precipitation electrode effected via generation of bubbles in the liquefied polymer;
FIG. 11 is a cross section of a device according to the present invention including a plurality of tilted circular wheels;
FIGs. 12a-b are side view and cross section of a wheel according to a preferred embodiment of the invention, including a dielectric core;
FIG. 13 is a cross section of a device according to the present invention including a plurality of tilted circular wheels in a different configuration;
FIG. 14 is a side view of a wheel according to a preferred embodiment of the invention, including liquefied polymer collecting cavities; and
FIG. 15 is a perspective view of yet another mechanism for forming a surface on the liquefied polymer of sufficiently high curvature which includes a rotateable strap of a conductive material formed with a plurality of protrusions rotating in parallel to the precipitation electrode.

### DESCRIPTION OF THE PREFERRED EMBODIMENTS

The present invention is of the manufacturing of a high efficiency particulate air filter, which is also referred to herein as unwoven polymer structure and of a device and process for the electrostatic precipitation of fibers thereof. Specifically, the present invention can be used to make a composite unwoven filter.

The principles and operation of the present invention may be better understood with reference to the drawings and the accompanying description.

Before explaining at least one embodiment of the invention in detail, it is to be understood that the invention is not limited in its application to the details of construction and the arrangement of the components set forth in the following description or illustrated in the drawings. The invention is capable of other embodiments or of being practiced or carried out in various ways. Also, it is to be understood that the phraseology and terminology employed herein is for the purpose of description and should not be regarded as limiting.

According to the method of the present invention high efficiency particulate air filter comprising unwoven fibers of a polymer can be produced. The filter according to the present invention is capable of filtering out at least 99.97 % of 0.3 µm particulates in air flowing at 5 cm/s and has a pressure drop of 13 mm H₂O, preferably of about 10 mm H₂O, more preferably of about 5 mm H₂O, most preferably of about 2 mm H₂O, optimally of about 0.75 mm H₂O, or less. Thus a pressure drop of any value in a range of about 0.75 mm H₂O and about 13 mm H₂O is within the scope of the present invention.

The filter obtained with the method of the present invention preferably has a dust load to filter weight per area ratio of about 1 to about 1.8. Any value within this range is within the scope of the present invention. For example, a filter according to the present invention weighting 100 grams/m² and having a 1.5 dust load to filter weight per area ratio suffers a two fold increase in its pressure drop when loaded with 150 grams/m² of dust.

It will be appreciated that the filters disclosed in U.S. Pat. Nos. 4,874,659 and 4,178,157 described in the Background section above are characterized by a dust load to filter weight per area ratio of less than 0.8.

According to a preferred embodiment of the present invention the filter is substantially electrically neutral and therefore its characteristics as a filter are much less affected by air humidity as compared with the filters disclosed in U.S. Pat. Nos. 4,874,659 and 4,178,157, described in the Background section above, which owe their performances to the charges associated therewith. The filter of the present invention becomes electrically neutral typically within 5-10 minutes after its precipitation on a precipitation electrode, as further described hereinunder.

According to another preferred embodiment of the present invention the fibers have a diameter of about 0.1 µm to about 20 µm. Fibers having a diameter of about 0.1-0.5 µm, about 0.5-2 µm, about 2-5 µm and about 5-20 µm, are all within the scope of the present invention, and are obtainable by selecting appropriate process parameters as further detailed hereinunder. It will be appreciated that the filters disclosed in U.S. Pat. Nos. 4,874,659 and 4,178,157, described in the Background section above are characterized by diameters in a range more than 10 to about 200 µm.

According to yet another preferred embodiment of the present invention, at least about 90 % of the fibers have a diameter in a range of X and 2X, where X is any value in a range of about 0.1 µm and about 10 µm. According to still another preferred embodiment of the present invention, the filter featuring pores formed among the fibers, wherein at least about 90 % of the pores have a diameter in a range of Y and 2Y, where Y is any value in a range of about 0.2 µm and about 10 µm. These latter features of the filter according to the present invention are effected by the preferred method of its manufacture, as further detailed hereinunder. The filters disclosed in described in the Background section above fail to enjoy the described homogeneity in fiber and pore diameters.

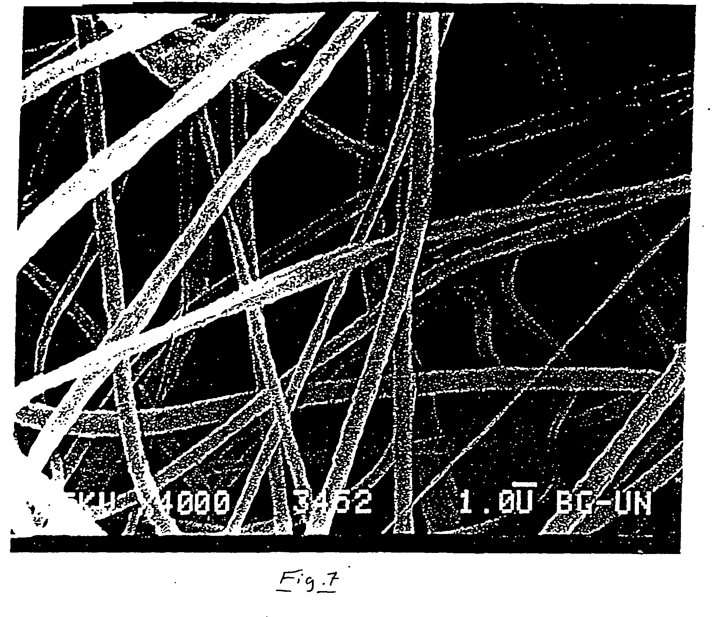

Figure 7 provides a 4000 fold magnification of the filter described herein. Please note that many of the fibers shown have a 1 µm thickness (equals to 4 mm in the electron micrograph) and that the deviation is low. Such magnifications were employed to extract the above listed features and ranges describing the physical properties of the filter according to the present invention, and which distinct the filter according to the present invention from prior art filters.

According to a preferred embodiment of the present invention the filter is further supplemented with a filler, which, as described hereinabove and further detailed hereinunder, is useful in the removal of mercaptans, as substrate for catalytic reactions, in the enhancement of the bactericidal effect of the filtering material, etc.

The technological process of preparation of the composite filtering material according to the present invention includes two basic stages, which take place simultaneously. The first consists of the formation and precipitation on a constantly moving surface (base) of ultra-thin fibers (typically in a range of 0.1-10 µm) from the polymer solution that flows out of the capillary apertures under the action of an electric field.

The second operation is the introduction of micro-dispersed particles of filler of a particular composition into the fiber structure (matrix) formed previously in the first stage of production.

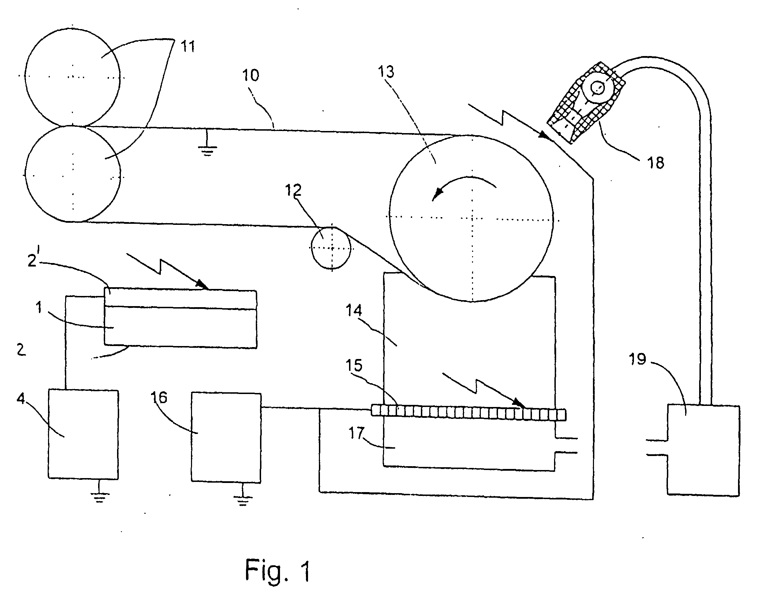

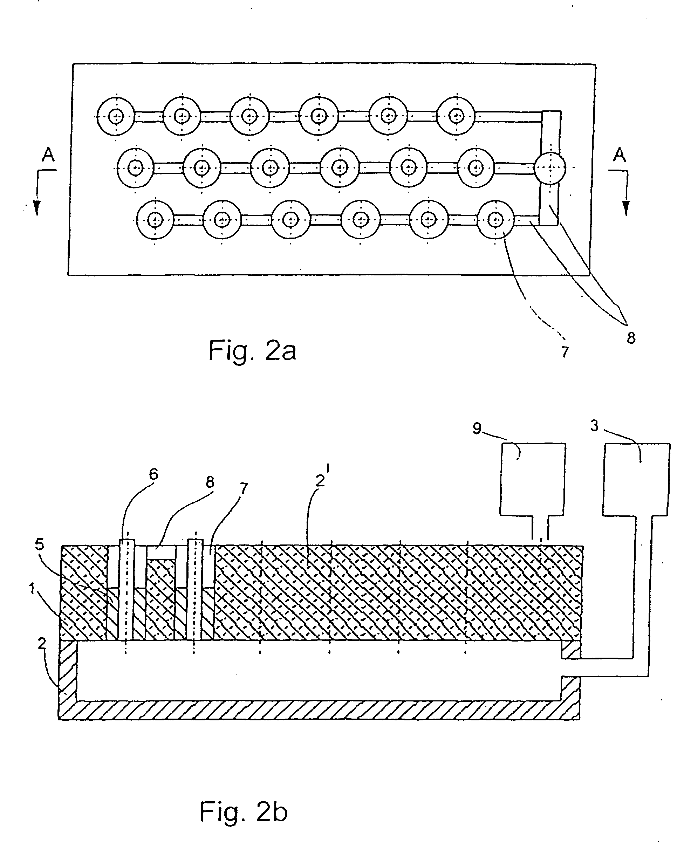

A basic variant of the device of the present invention (Figure 1) includes a high-voltage electrode-collector **1**, manufactured as a bath, filled with the polymer solution (or melted polymer) and provided with a base **2** and a cover **2'**. The electrode-collector is connected to a feeder **3** (shown in Figure 2b) by a flexible pipe, installed so as to allow vertical movement, and a source **4** of high voltage of negative polarity.

Spinnerets **5** with nozzles **6** having capillary apertures are screwed into threaded openings formed in cover **2** of electrode-collector as on a chess board (Figure 2). Because the height of the spinnerets is slightly less than the width of cover **2'** and the length of each nozzle **6** exceeds the width of cover **2'**, the nozzle section is placed above cover **2'** on the axis of cylindrical depressions **7**, connected to each other by a system of open channels **8** (Figure 2a). The solvent is fed into this system of channels from a vessel **9**.

A precipitation electrode **10** is situated at a certain distance (e.g., about 15-50 cm) above cover **2'**. Precipitation electrode **10** is manufactured in the form of a constantly moving surface (when in the operating mode), for example, a belt made of electrical conducting material. Precipitation electrode **10** is grounded. Shafts **11** and **12**, connected to an electrical motor (not depicted on drawings), are responsible for driving precipitation electrode **10**, keeping precipitation electrode **10** under tension, and preliminary compression of the material on precipitation electrode **10**.

A part of precipitation electrode **10** is wound around shaft **13**, which has a large diameter, and is thus immersed in the rectangular cavity of the electrified aerosol generator. The cavity of the electrified aerosol generator is divided into two sections by a porous conducting partition **15**. The latter is connected to a high-voltage source **16** of positive polarity. The lower part **14** of the electrified aerosol generator, forming pressure chamber **17**, is connected to a compressor (not shown on drawings). A micro-dispersible filler is poured onto the surface of the porous partition **15** in the upper part of the generator. The entire device depicted in Figure 1 is preferably contained in a hermetically sealed container, provided with a suction unit and a settling chamber for trapping and re-circulation of the solvent vapors (not shown on drawings).

The electrified aerosol generator may also be implemented in the form of a slot sprayer **18**, connected by a pipe to a dry powder ejection feeder **19** and a source of positive high voltage **16**. The use of the slot sprayer with a charging of aerosol in the field of the corona discharge is preferred in the case of metallic powders (including graphite powder) and powders that are not easily fluidized.

It was experimentally found that in filters with high pleatability performances are achievable by adding to the basic layer of polymer a minute quantity (say about 2-3 %) of a powder, such as polypropylene powder, epoxy powder and/or phenolformaldehyde powder, and further adding about 5-6 % of a second powder such as talc powder, zinc powder and/or titanium oxide powder and thereafter heating the powders loaded filter to about 70-80 % of the melting temperature of the polymer employed in the basic layer.

The heating rate of any of the above powders depends on the powder's dispersion and specific heat characteristics. So, for polymer powders with high dispersion (root mean square diameter of 1-5 µm) heating is low. Coarser metallic and oxide powders require relatively higher temperatures.

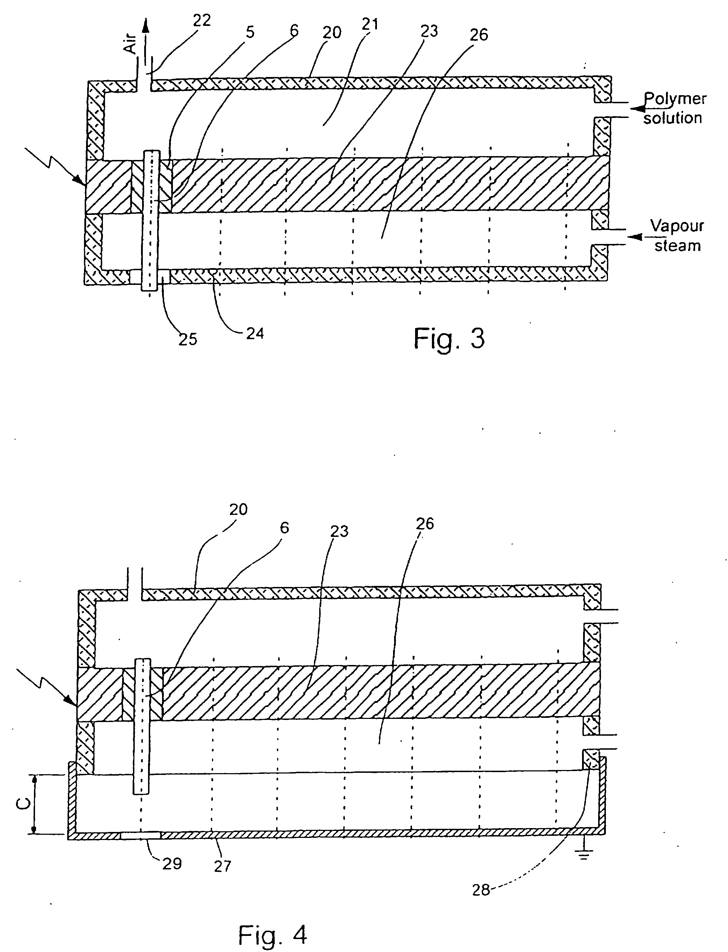

The direction of fiber feeding on the vertical surface may be reversed, and the dimensions of the electrode-collector and the number of capillaries may be minimized with the help of the device depicted in Figure 3. The device consists of an electrode-collector frame **20**, manufactured from a dielectric material and having a central channel **21**, for example, of cylindrical shape. This channel is connected by a pipe to a feeder (not shown on the drawing) and is provided with aperture **22** to facilitate exchange of gases with the atmosphere. A busbar **23** with spinnerets **5** and nozzles having capillary apertures is installed in the lower part of frame **20**. The nozzles are connected to a source of high voltage (not shown on the drawing). Cover **24** with apertures **25** is placed before the busbar. Nozzles **6** are placed in these apertures with coaxial clearance. The internal surface of the cover and busbar form a cavity **26**, which is connected to a saturator (not shown on drawing) by a pipe.

In a number of cases, the process of manufacturing the composite filtering material may be improved by implementation of the device shown in Figure 4. Here, a dielectric flange **28** serves as a base for a perforated grounded plate **27** (or alternatively an under potential plate, of the same polarity of the high voltage electrode, but with lower voltage), which is installed, with a certain clearance **C**, say about 0.5 - 3 cm, parallel to the surfaces of the electrode-collector **20** and the busbar **23**. Plate **27** rests on the flange in such a way as to provide for vertical movement for regulation of the size of the clearance **C**. Apertures **29** of the perforated plate are coaxial to the apertures of electrode-collector's nozzles. The internal surface of perforated plate **27** and busbar **23** form a cavity **26**, which is connected by a pipe to a saturator.

The proposed device in its basic form functions as follows: From feeder 3 (Figure 2b), the polymer solution runs into electrode-collector bath 1, and under the action of hydrostatic pressure the polymer solution begins to be extruded through the capillary apertures of nozzles **6**. As soon as a meniscus forms in the polymer solution, the process of solvent evaporation starts. This process is accompanied by the creation of capsules with a semi-rigid envelope, the dimensions of which are determined, on the one hand, by hydrostatic pressure, the concentration of the original solution and the value of the surface tension, and, on the other hand, by the concentration of the solvent vapor in the area of the capillary apertures. The latter parameter is optimized by choice of the area of free evaporation from cover **2'** and of the solvent temperature. Alternatively or additionally it is optimized by covering the device and supplementing its atmosphere with solvent vapor (e.g., via a solvent vapor generator).

An electric field, accompanied by a unipolar corona discharge in the area of nozzle **6**, is generated between cover **2'** and precipitation electrode **10** by switching on high-voltage source **4**. Because the polymer solution possesses a certain electric conductivity, the above-described capsules become charged. Coulombic forces of repulsion within the capsules lead to a drastic increase in hydrostatic pressure. The semi-rigid envelopes are stretched, and a number of point microruptures (from 2 to 10) are formed on the surface of each envelope. Ultra-thin jets of polymer solution start to spray out through these apertures. Moving with high velocity in the inter-electrode interval, these jets start to lose solvent and form fibers that are chaotically precipitated on the surface of the moving precipitation electrode **10**, forming a sheet-like fiber matrix. Since the polymer fiber posses high surface electric resistance and the volume of material in physical contact with precipitation electrode surface is small, the fiber matrix preserves the negative electric charge for a relatively long time, about 5-10 minutes. It will be appreciated that the electrical resistance can be regulated by special additives.

When compressed air is fed into pressure chamber **17** of electrified aerosol generator **14** and high-voltage source **16** is switched on, the micro-dispersible filler becomes fluidized and acquires a positive electric charge. Under the action of electric and aerodynamic forces, the filler particles move to the surface of precipitation electrode **10**, which holds the fiber matrix. As a result of the action of Coulombic forces, the filler particles interact with the fiber matrix, penetrate its structure, and form a composite material.

When the belt of precipitation electrode **10** passes between shafts **11**, preliminary material compression takes place, accompanied by redistribution of the filler particles in the matrix volume. Spherical particles, attached to the fiber material solely by electrical forces, move along paths of least resistance into micro-zones having a minimum volume density of matrix material, filling large pores, and thus improving the homogeneity of the composite and the degree of micro-dispersity of the pores.

The micro-dispersible powders from the following materials may be used as fillers: a polymer of the same chemical composition as that in the matrix, polymer latexes, glass, or Teflon, as well as active fillers that lead to the production of composite microfiltering materials with new consumer properties. These new materials may find application as adsorbents, indicators, catalysts, ion-exchange resins, pigments bactericides, etc.

The use of an electrified aerosol generator, as described above with the fluidized layer, facilitates high productivity of the process and product homogeneity. However, several powders have difficulty in forming a fluidized layer: metallic powders, particularly catalytic metals, can be subjected to electric precipitation only in the field of a unipolar corona discharge. Therefore, in these cases, as well as in the case in which it is necessary to measure out exact amounts of filler, it is worthwhile to use a slot sprayer **18** as the electrified aerosol generator (Figure 1).

When compressed air from a compressor is fed into the dry powder feeder and the high voltage source is switched on, the powdered filler is ejected into slot sprayer **18**. The aerosol cloud coming out of the sprayer apertures becomes charged in the unipolar corona discharge field, and under the action of electric and aerodynamic forces is transferred to the precipitation electrode, where it interacts with the fiber matrix as described above.

The functioning of the device described in Figure 3 corresponds, in the main aspects, with the operation of the basic device. The main difference is as follows: solvent vapor from the saturator under slight excess pressure is fed into cavity **26** and exits via aperture **25**, flowing over the edges of the apertures of nozzles **6**. Alternatively or additionally the device is covered and its atmosphere supplemented with solvent vapor (e.g., via a solvent vapor generator).

The advantage of this configuration lies in the facts that it provides the possibility of easy spatial re-orientation and fiber feeding in any direction and that it can be manufactured in compact form with a small number of capillaries. A device of this type is not efficient in installations aimed at high throughput due to difficulties in obtaining homogenous distribution of the vapor-air mixture through a large number of apertures and to the possibility of vapor condensation in pipes and subsequent falling of drops.

Intensification of the fiber matrix manufacturing process and a reduction of fiber width in order to produce filtering materials with a minimum pore size assumes, on the one hand, that the intensity of the electric field should be increased to values close to the level at which electrical discharges would begin to form between the emerging fibers and precipitation electrode **10** and, on the other hand, that the concentration of solvent vapors in the inter-electrode interval be increased in order to maintain the capability of consolidating fiber formation. Increasing the solvent vapors in the inter-electrode interval can be effected, for example, by covering the device and supplementing its atmosphere with solvent vapor (e.g., via a solvent vapor generator). The optimal electric field strength, both between electrode-collector **1** and precipitation electrode **10**, and between the electrified aerosol generator and precipitation electrode **10**, is between about 2.5 kV/cm and about 4 kV/cm.

An increase in the average intensity and heterogeneity of the electric field, leading to corona discharge, may be realized by installing, in the inter-electrode interval, one or more grounded electrodes (or alternatively under potential electrodes, of the same polarity of the high voltage electrode, but with lower voltage) manufactured, for instance, in the form of wires. This solution facilitates an increase in the productivity of the process by 1.5-2 times, but it does not lead to formation of short fibers with, varying strength and size parameters. The negative effect of using a linear grounded electrode instead of a planar grounded electrode, thereby producing a nonhomogeneous electrical field, may be reduced by increasing the solvent vapor concentration in the fiber-formation area, which is difficult in open devices and increases solvent consumption and in some cases danger of fire. Increasing the solvent vapor concentration in the fiber-formation area can be effected by, for example, covering the device and supplementing its atmosphere with solvent vapor (e.g., via a solvent vapor generator).

This deficiency may be overcome by application of the device described above and depicted in Figure 4.

Switching on the high-voltage source **4** in the **C** clearance produces an homogeneous electric field, the intensity of which may be easily increased to 10-15 kV/cm. Under these conditions, the impact of the electric field upon the jet of polymer solution increases significantly. The fiber comes out thinner and more homogeneous along its length. The initial fiber velocity also increases, and thereafter it comes through apertures **29** of perforated plate **27** and is stacked on precipitation electrode surface as described above. A change of the size of clearance **C** facilitates regulation of fiber thickness and device productivity, as well as the degree of material porosity.

The present invention may be used to produce the polymer fiber structure from a much wider range of polymers than is possible using the prior art of U.S. Pat. No. 2,349,950.

While reducing the present invention into practice, it was found that for obtaining a high efficiency particulate air unwoven fiber structure, capable of filtering out 99.97 % of 0.3 µm particulates in air flowing at 5 cm/s and further having the above described features, improved charging of the polymer is required. Improved charging is effected according to the present invention by mixing the liquefied polymer with a charge control agent (e.g., a dipolar additive) to form, for example, a polymer-dipolar additive complex which apparently better interacts with ionized air molecules formed under the influence of the electric field. It is assumed, in a non-limiting fashion, that the extra-charge attributed to the newly formed fibers is responsible for their more homogenous precipitation on the precipitation electrode, wherein a fiber is better attracted to a local maximum, which is a local position most under represented by older precipitated fibers, which, as will be recalled, keep their charge for 5-10 minutes. The charge control agent is typically added in the grams equivalent per liter range, say, in the range of from about 0.01 to about 0.2 normal per liter, depending on the respective molecular weights of the polymer and the charge control agent used.

U.S. Pat. Nos. 5,726,107; 5,554,722; and 5,558,809 teach the use of charge control agents in combination with polycondensation processes in the production of electret fibers, which are fibers characterized in a permanent electric charge, using melt spinning and other processes devoid of the use of an precipitation electrode. A charge control agent is added in such a way that it is incorporated into the melted or partially melted fibers and remains incorporated therein to provide the fibers with electrostatic charge which is not dissipating for prolonged time periods, say months.

In sharp distinction, the charge control agents according to the present invention transiently bind to the outer surface of the fibers and therefore the charge dissipates shortly thereafter (within minutes). This is because polycondensation is not exercised at all such that chemical intereaction between the agent and the polymer is absent, and further due to the low concentration of charge control agent employed. The resulting filter is therefore substantially charge free.

Thus, a mechanism for charging the liquefied polymer to a first electrical potential relative to the precipitation electrode according to the present invention preferably includes a source of high voltage, as described

Suitable charge control agents include, but are not limited to, mono- and poly-cyclic radicals that can bind to the polymer molecule via, for example, -C=C-, =C-SH- or -CO-NH- groups, including biscationic amides, phenol and uryl sulfide derivatives, metal complex compounds, triphenylmethanes, dimethylmidazole and ethoxytrimethylsians. Conductivity control additives as further described below may also be employed.

The functionality of biscationic amides, for example, was experimentally evaluated. To this end, a 14 % solution of a branched polycarbonate polymer (MW = ca. 110,000) in chloroform was prepared (viscosity was 180 cP). The above solution, supplemented with increasing concentration of bicationic acid amide was used in combination with a device as depicted in, and as described with relation to, Figure 3 to precipitate filters, which were thereafter inspected for physical and functional properties. The examination included estimation of fiber diameter and uniformity of distribution, as well as, pressure drop evaluations. The addition of increasing amounts of bicationic acid amide did not alter fiber diameter, however, it had a striking effect on uniformity of distribution which resulted in lowering the pressure drop values associated with such filters, as exemplified in Table 1, below:

**TABLE 1**

| **Concentration of bicationic acid amide (N·10**^{**-2**}**)** | **Pressure drop for 100 g/m**^{**2**} **filters (mm H**_{**2**}**O)** |
|---|---|
| 0 | 22 |
| 0.1 | 22 |
| 0.2 | 18 |
| 0.3 | 6 |
| 0.5 | 5 |
| 0.6 | 5 |
| 0.7 | 6 |
| 1.0 | 5 |

It is evident from Table 1 that the added charge control agent improves the filter product in terms of pressure drop. It is further clear that the influence of the charge control agent reaches its maximal effectiveness in a low concentration and that increasing its concentration above that value fails to further improve the quality of the product in terms of pressure drop.

In a similar experiment, the functionality of metal complex compound (iron salicylic acid complex), for example, was experimentally evaluated. To this end, a 12 % solution of a polysulfone polymer (MW = ca. 80,000) in chloroform was prepared (viscosity was 140 cP, conductivity was 0.32 µS). The above solution, supplemented with increasing concentration of the metal complex compound was used in combination with a device as depicted in, and as described with relation to, Figure 3 to precipitate filters, which were thereafter inspected for physical and functional properties. The examination included estimation of fiber diameter and uniformity of distribution, as well as, pressure drop evaluations. As before, the addition of increasing amounts of the charge control agent did not alter fiber diameter, however, it had a striking effect on uniformity of distribution which resulted in lowering the pressure drop values associated with such filters, as exemplified in Table 2, below:

**TABLE 2**

| **Concentration of iron salicylic acid complex (N·10**^{**-2**}**)** | **Pressure drop for 100 g/m**^{**2**} **filters (mm H**_{**2**}**O)** |
|---|---|
| 0 | 18 |
| 0.1 | 9 |
| 0.2 | 3 |
| 0.3 | 3 |
| 0.5 | 3 |
| 0.6 | 3 |
| 0.7 | 3 |
| 1.0 | 3 |

It is evident from Table 2 that the added charge control agent improves the filter product in terms of pressure drop. It is further clear that the influence of the charge control agent reaches its maximal effectiveness in a low concentration and that increasing its concentration above that value fails to further improve the quality of the product in terms of pressure drop.

This phenomenon can be explained by saturation of the polymer fiber surface by the charge control agent and further by loss of access charge to the surrounding atmosphere.

The charge (or its absence) can be measured by a dedicated device namely a gauge for measuring electric field intensities. The end value of the electric charge or rate of loss does not reflect on homogenous fiber distribution. Only the initial rate of the charge is important to this end. The time required for charge dissipation is about few minutes.

The device and method according to the present invention differ from those disclosed in U.S. Pat. Nos. 4,043,331 and 4,127,706 to Martin et al. and U.S. Pat. No. 1,975,504 to Anton Formhals in that it enables manufacturing a high efficiency particulate air unwoven fiber structure, capable of filtering out 99.97 % of 0.3- µm particulates in air flowing at 5 cm/s and which further enjoy the physical features described hereinabove. The devices and methods disclosed in the above-patents are only capable of providing lower grade filters which fail to meet the requirements of high efficiency particulate air filters as described herein.

According to a preferred embodiment of the present invention, charging the liquefied polymer to a first electrical potential relative to the precipitation electrode is followed by recharging the liquefied polymer to a second electrical potential relative to the precipitation electrode, the second electrical potential is similar in magnitude, yet opposite in sign with respect to first electrical potential. Preferably the charge is oscillated between the first and second electrical potentials in a frequency of about 0.1 - 10 Hz, preferably about 1 Hz. The charge oscillation results in process productivity, more homogeneous distribution of precipitated fibers and yielding filters with improved qualities as described hereinabove.

Polymers amenable to the present invention include polysulfone, polyphenyl sulfone, polyether sulfone, polycarbonate in general, ABS, polystyrene, polyvynilidene fluoride, postchlorinated polyvinyl chloride and polyacrilonitrile. Suitable solvents include, *inter alia,* chloroform, benzene, acetone and dimethylformamide. The optimal concentration of the solution depends on the specific polymer and solvent used. Generally, the higher the concentration of polymer in the solution, the higher the process yield and the lower the product porosity. Concentrations of between about 10 % and about 12 % have been found optimal for the polymer solution used in electrode-collector **1**. Melted polymers such as, but not limited to, polyolefins, including polyethylene and polypropylene, are also amenable to the process according to the present invention.

It has been found advantageous to add certain additives to the solutions of these polymers. Amine salts such as tetraethyl ammonium bromide and benzyltriethylammonium bromide, are used to regulate the conductivity of the polymer solution, as described above. Small amounts of high molecular weight (order of 500,000) polyoxyalkylene additives, such as polyethylene glycol and polyvinyl pyrrolidone promote the formation of the polymer solution jets by reducing intermolecular friction. Surfactants such as dimethylmidazole and ethoxytrimethylsilane enhance fiber thickness and uniformity. Using additives reducing viscosity and surface tension it is possible to increase the polymer concentration up to about 17-18%.

More generally, the scope of the present invention includes the manufacture of the polymer fiber structure from a liquefied polymer, and not just from a polymer solution. By a liquefied polymer is meant a polymer put into a liquid state by any means, including dissolving the polymer in a solvent, as described above, and melting the polymer.

Also more generally, the scope of the present invention includes the formation of a surface on the liquefied polymer, of sufficient curvature to initiate the process discussed above of the charged capsules, leading to the formation of the jets of liquefied polymer that turn into fibers and precipitate onto precipitation electrode **10**. As discussed above, if the liquefied polymer is a polymer solution, the fibers are formed by evaporation of the solvent. If the liquefied polymer is a melt, the fibers are formed by solidification of the jets.

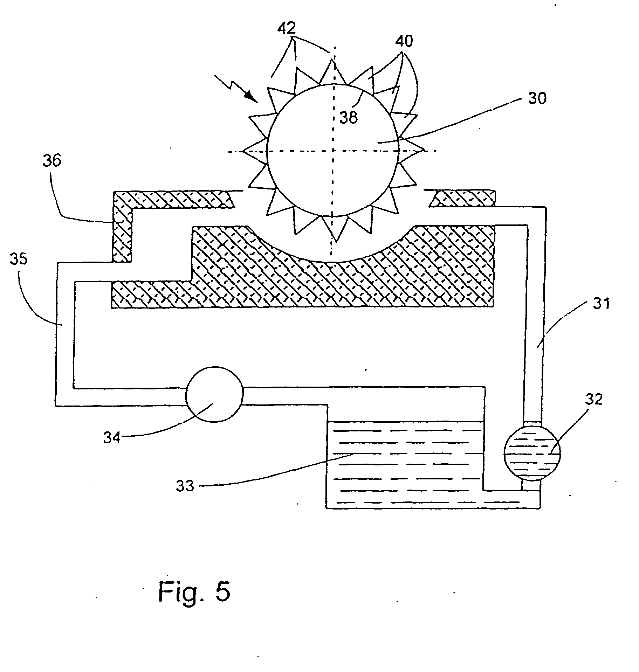

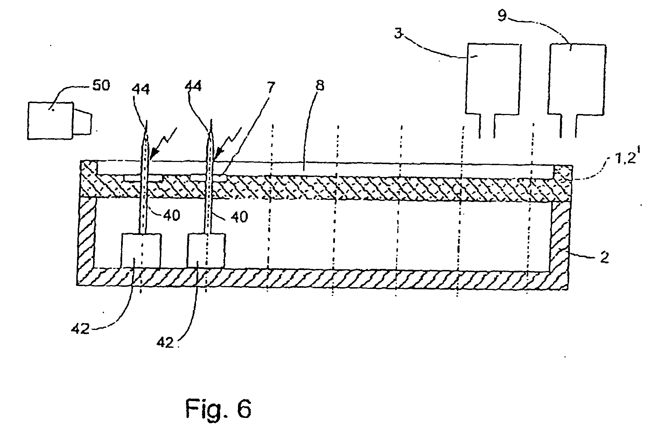

In the process of the present invention as described above, the highly curved surfaces are the menisci of polymer solution emerging from nozzles **6**. Other mechanisms for forming these highly curved surfaces are illustrated in Figures 5 and 6. Figure 5 illustrates a variant of electrode-collector **1** in which the polymer solution, stored in a tank **33**, is pumped by a pump **32** through a feed pipe **31** to a delivery chamber **36**. Rotateably mounted in delivery chamber **36** is a circular wheel **30** made of an electrically conductive material. Mounted on rim **38** of wheel **30** are triangular protrusions **40** made of a material that is wetted by the polymer solution. Tips **42** of protrusions **40** point radially outward from wheel **30**. Wheel **30** is charged negatively by source **4**. As the polymer solution is delivered to chamber **36**, wheel **30** rotates and each of protrusions **40** is successively coated with a layer of the polymer solution, which in turn acquires a negative charge. The surface of the portion of this polymer solution layer that surrounds tip **42** constitutes the highly curved surface whence the charged jets emerge. Polymer solution not consumed in the course of precipitating fibers onto precipitation electrode **10** is returned to tank **33** via an outlet pipe **35** by a pump **34**. The optimal concentration of polymer solution used in this variant of electrode-collector **1** generally has been between about 14% and about 17%.

Figure 6 is a partial illustration, in cross-section, similar to the cross-section of Figure 2b, of a variant of electrode-collector **1** in which nozzles **6** are replaced by reciprocating needles **40**, made of an electrically conductive material that is wetted by the polymer solution. Each needle **40** is provided with a mechanism **42** for raising and lowering needle **40**. When a needle **40** is lowered, the sharpened tip **44** thereof is wetted and coated by the polymer solution. The surface of the polymer solution is highly curved at tip **44**. When a needle **40** is raised towards precipitation electrode **10**, the high voltage difference between needle **40** and precipitation electrode **10** causes jets of the polymer solution to emerge from the polymer solution surrounding tip **44** and to stream towards precipitation electrode **10**. It should be noted that in this variant of electrode-collector **1**, only needles **40**, and hence the polymer solution thereon, are negatively charged by source **4**.

Also shown in Figure 6 is a speaker **50** of a system for producing acoustical vibrations in the air above electrode-collector **1**. Speaker 50 emits a tone of a single frequency, preferably in the range between about 5000 Hz and about 30,000 Hz, towards needles **40**. The vibrations thus induced in the highly curved surfaces of the polymer solution on tips **44** have been found to stimulate the emission of jets of polymer solution towards precipitation collector **10**.

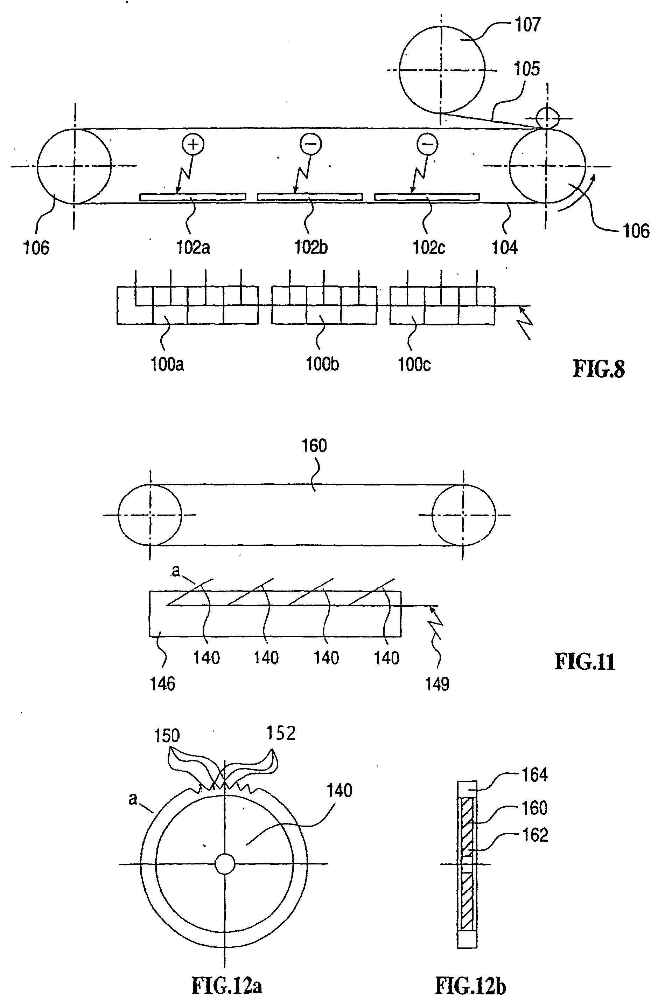

Figures 8-15 teach additional preferred embodiments of the device and method according to the present invention.

Thus, as shown in Figure 8, for the formation of a multilayered filter having a prefilter layer and a support layer surrounding a middle layer of high efficiency particulate air filter, a triple configuration of the device described above, with some modifications described hereinunder is provided. Thus, electrode-collector **1** is replaced according to this configuration by three electrode-collectors **100a**, **100b** and **100c**, each designed for precipitation of one of the above layers of the layered filter. Via a suitable source of high voltage, electrode-collectors **100a**, **100b** and **100c** are provided with, for example, a negative potential of, for example, -100 kV. Precipitation electrode **10** according to this embodiment is replaced by a modified version having three independent precipitation electrodes **102a**, **102b** and **102c** and a revolving belt **104**, wound around revolving shafts **106**. The location of precipitation electrodes **102a**, **102b** and **102c** is selected above electrode-collectors **100a**, **100b** and **100c** and via independent sources of high voltage they are provided with positive, negative and negative potentials, say (+1) - (+5), (-1) - (-2) and (-2) - (-5) kV, respectively, generating, for example, 101-105, 98-99 and 95-98 KV potential differences with their respective electrode-collectors **100a**, **100b** and **100c**. These potential differences in combination with the potential drop with distance and with variable polymer solutions are sufficient to induce marked changes upon the precipitated fibers as follows.

In electrode systems such as point-plate with abrupt non-uniform electrical field the intensity drop in the area near the plate electrode is small, so the relative potential can provide sufficient accelerating or decelerating effect.

Thus, fibers resulting from pair **100a** - **102a** form a prefilter structure or layer made of relatively refined and coarse (e.g., 8-10 µm fibers), having a large volume (porosity 0.96), low aerodynamic resistance and high dust loading capacity (40-50 % of total mass).

Fibers resulting from pair **100b** - **102b** form a high efficiency particulate air filter made of fine fibers (e.g. 1-3 µm in diameter), having lower porosity (e.g., about 0.85-0.88), higher aerodynamic resistance, and a dust loading capacity of about, e.g., 20-30 %.

Whereas fibers resulting from pair **100c** - **102c** form a support film or layer for providing the multilayer filter with mechanical strength and technical properties, such as pleatability, characterized by coarse fibers (10-20 µm in diameter), porosity of 0.9-0.92 and dust loading capacity of about 20-30 %.

In fact, this version of the device according to the present invention combines three individual devices as described herein, each with somewhat modified properties, into a single device enabling the continuous manufacturing of three (or more) layered filter structures, each of the three or more layers featuring different properties and serving a different purpose. Any suitable number, e.g., from 2 to 10, of combined devices in envisaged for different application. In any case, according to this embodiment of the present invention, each of the layers is completely precipitated before turning to the precipitation of another layer, therefore, the properties of the device are selected such that the efficiency of precipitation is as high as required to complete a layer's precipitation in each of the stations in a single round (e.g., by controlling the length of each section or individual device). The resulting filter **105** is rolled over an additional rotating shaft **107**.

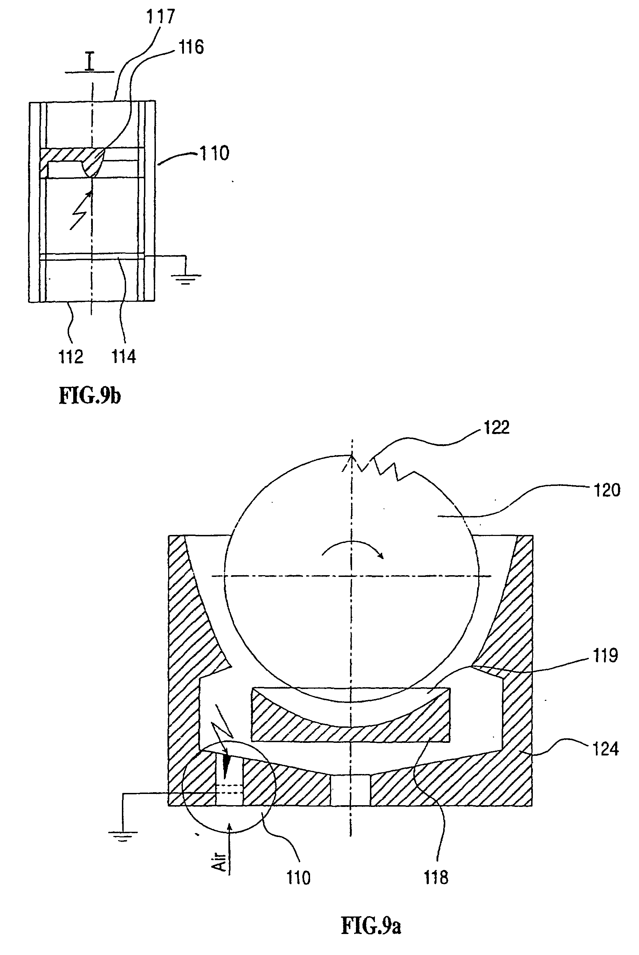

As shown in Figures 9a-b, according to another preferred embodiment of the present invention ionized air generated by an air ionizer **110**, including an air inlet **112**, a grounded net structure **114**, an ionizing electrode **116** generating a potential of e.g., 15 KV/cm, and an air outlet **117**, as well known in the art, is used to increase the charging of the liquefied polymer (or fibers) and thereby to enable more homogenic precipitation thereof on a precipitation electrode. To this end, a bath **118**, in which the liquefied polymer **119** is held, and from which aliquots thereof are collected via a rotating wheel **120** featuring triangular protrusions **122**, as further detailed above with respect to Figure 5 (wheel **30**) is contained in a housing **122** supplemented with ionized air via air ionizer **110**. As before, increasing the solvent vapors in the inter-electrode interval can be effected, for example, by covering the device and supplementing its atmosphere with solvent vapor (e.g., via a solvent vapor generator).

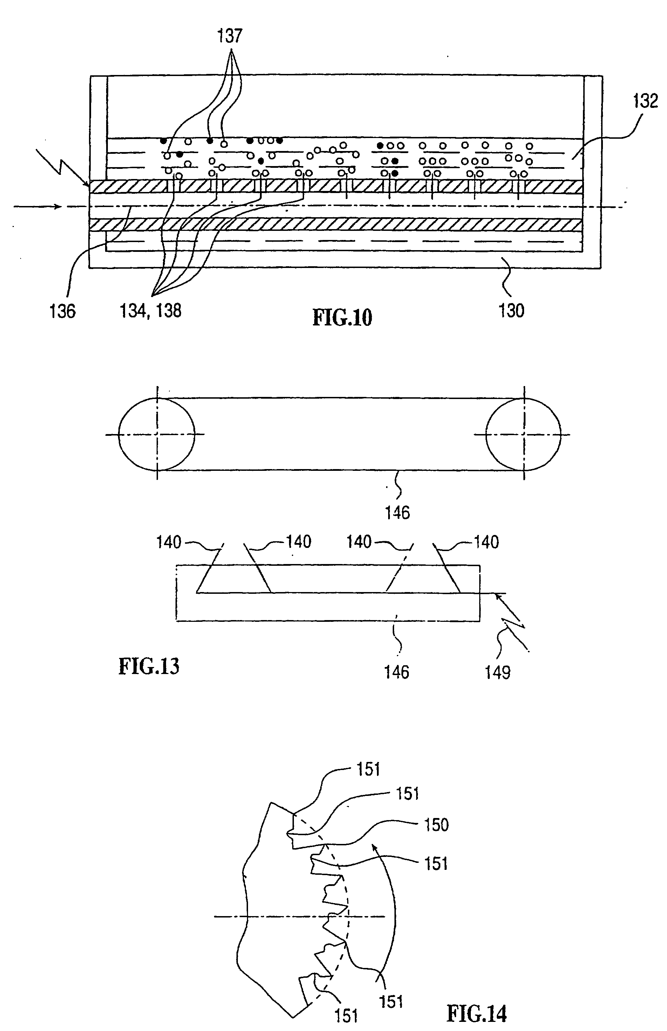

As shown in Figure 10, according to another preferred embodiment of the present invention, a mechanism for forming a surface on the liquefied polymer of sufficiently high curvature to cause at least one jet of the liquefied polymer to be drawn by an electrical potential to the precipitation electrode is provided, in which gas (preferably solvent saturated vapor) bubbles formed in the liquefied polymer provide the required surfaces.

To this end, an electrode-collector or bath **130** in which the liquefied polymer **132** (typically but not obligatory a melted polymer in this case) is held is provided with a compressed gas releasing mechanism **134**, typically in a form of a pipe **136** supplemented with a plurality of bubbles **137** generating openings **138**. When reaching the surface of the liquefied polymer, the bubbles form a surface on the liquefied polymer of sufficiently high curvature to cause at least one jet of the liquefied polymer to be drawn by the electrical potential to the precipitation electrode.

As shown in Figures 11 and 12a-b and 13, according to yet another preferred embodiment of the present invention, rotateably mounted in delivery chamber **146** is a plurality of circular wheels **140**. Mounted on rim **148** of wheels **140** are triangular protrusions **150** made of a conductive material that is wetted by the polymer solution. Tips **152** of protrusions **150** point radially outward from wheels **140**. Wheels **140** are charged negatively by a source **149**. Wheels **140** are provided in a tilted orientation with respect to a precipitation electrode **160**, such that as the polymer solution is delivered to chamber **146**, wheels **140** rotates and each of protrusions **150** is successively coated with a layer of the polymer solution, which in turn acquires a negative charge, yet, due to the tilted configuration, in general, protrusions **150** which are not dipped in the polymer solution are positioned more evenly apart from electrode **160**, as compared with the vertical configuration, shown, for example, in Figure 5. This, in turn, results in more homogenous fiber precipitation and more homogenous fiber thickness or diameter. In order to avoid electric field superposition effects while implementing this configuration of a plurality of wheels **140**, cores **162** of wheels **140** is made of a dielectric substance, whereas outer rims **148** thereof, including protrusions **150**, are made of an electric substance. In a somewhat different configuration shown in Figure 13 the superposition effect is eliminated by selecting an appropriately non shielding wheels tilt arrangement.

As shown in Figure 14, according to yet another preferred embodiment of the present invention, each of protrusions **150** is formed with a liquefied polymer collecting cavity **151**, for facilitating the collection of a measured amount of liquefied polymer. The advantage of this embodiment of the present invention is that it delays the process of fiber formation, such that a protrusion will generate fibers only when about to reenter the liquefied polymer, such that all fibers will be generated from a similar location and distance with respect to the precipitation electrode, thereby improved homogeneity is achievable.

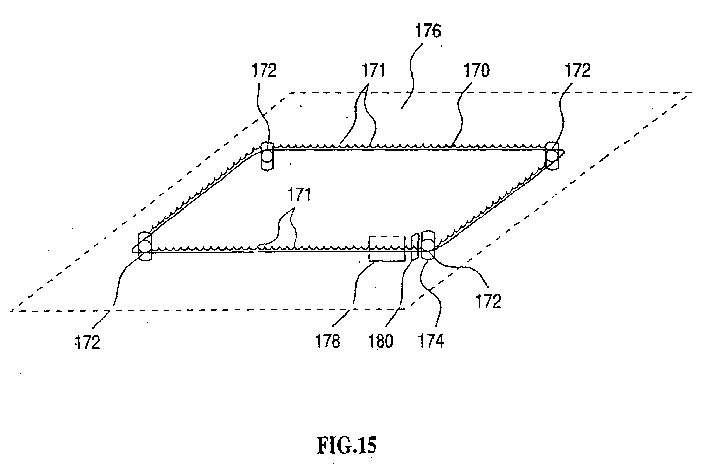

As shown in Figure 15, according to yet another preferred embodiment of the present invention, a mechanism for forming a surface on the liquefied polymer of sufficiently high curvature to cause at least one jet of the liquefied polymer to be drawn by the electrical potential to the precipitation electrode includes a rotateable strap **170** of a conductive material, formed with a plurality of protrusions **171**, rotating around at least two shafts **172** and connected to a source **174**. Protrusions **171** are pointed at a direction of a precipitating electrode **176**, such that when strap **170** is rotated through a reservoir **178** including a liquefied polymer, aliquots thereof accumulate over protrusions **171** to thereby generate the a surface on the liquefied polymer of sufficiently high curvature to cause at least one jet of the liquefied polymer to be drawn to precipitation electrode **176**. Since the field is oriented perpendicular to the direction of rotation of strap **170**, strap **170** can be rotated at higher speeds, resulting in even more homogenous polymer fiber distribution over electrode **176**. According to a preferred embodiment, just before entering reservoir **178**, strap **170** is wiped from remnants of polymer by a wiper **180**, made, for example, of an adsorbing material.

Thus, the distance between the rotating strap and the precipitation electrode is constant at all locations, so that the electric field intensity experienced at each location is similar, resulting in more uniform fiber thickness. Furthermore, since there is no centrifugal force in the direction of the precipitation electrode, it is possible to increase the speed of the rotating strap to thereby improve mass distribution and productivity.

## Claims

1. A device for transforming a liquefied polymer into a fiber structure, comprising:
(a) a precipitation electrode (10) and a source of high voltage,
**characterized by**
(b) a first mechanism (2') for charging the liquefied polymer to a first electrical potential relative to said precipitation electrode, comprising in combination:
(i) the source (4) of high voltage;
(ii) a device (1) for mixing the liquefied polymer with a charge control agent having minimal or no chemical interaction with the liquefied polymer;
and
(c) a second mechanism (5,6) for forming a surface on said liquefied polymer of sufficiently high curvature to cause at least one jet of the liquefied polymer to be drawn by said first electrical potential to said precipitation electrode;
wherein said first and second mechanisms are designed such that when a plurality of fibers are precipitated on said precipitation electrode, a high efficiency particulate air unwoven fiber structure, capable of filtering out at least 99.97 % of 0.3 µm particulates in air flowing at 5 cm/s is obtainable, **characterized in that** it further comprises
(d) an aerosol generator operative to supply an aerosol to said precipitation electrode at a second electrical potential difference from said precipitation electrode opposite in sign to said first electrical potential difference.

2. The device of claim 1, wherein said first mechanism for charging the liquefied polymer to a first electrical potential relative to said precipitation electrode further includes:
(iii) a source (110) of ionized air being in contact with said liquefied polymer.

3. The device of claim 1, wherein said second mechanism is effected by at least one rotating wheel (30, 140) having a rim (38, 148) formed with a plurality of protrusions (40, 150).

4. The device of claim 3, wherein each of said protrusions is formed with a liquefied polymer collecting cavity (151).

5. The device of claim 3, wherein each of said at least one wheel is tilted with respect to said precipitation electrode.

6. The device of claim 3, wherein each of said at least one wheel includes a dielectric core (162).

7. The device of claim 1, wherein said precipitation electrode is operative to move past said mechanism for forming said surface of high curvature.

8. The device of claim 7, wherein said precipitation electrode includes a belt.

9. The device of claim 1, wherein said mechanism for forming said surface of high curvature includes at least one protrusion (40) made of a material which is wetted by the liquefied polymer, said at least one protrusion including a tip (42) whereon said surface of high curvature is formed.

10. The device of claim 9, wherein said at least one protrusion is disposed on a rim of a wheel with said tip pointing radially outward from said wheel.

11. The device of claim 9, further comprising:
(e) a bath (1, 2, 2') for holding the liquefied polymer; wherein said at least one protrusion is operative to reciprocate within said bath, said jets of the liquefied polymer being formed at a closest approach of said at least one protrusion to said precipitation electrode.

12. The device of claim 1, wherein said aerosol generator includes:
(i) a pressure chamber (17); and
(ii) a partition (15) between said pressure chamber and said precipitation electrode; said pressure chamber and said partition cooperating to fluidize a filler powder which is drawn by said second electrical potential difference to said precipitation electrode.

13. The device of claim 11, wherein said aerosol generator includes a slot sprayer (18).

14. A method for forming a polymer into a high efficiency particulate air unwoven fiber structure with the device of claim 1, comprising the steps of:
(a) liquefying the polymer, thereby producing a liquefied polymer; and
(b) providing a precipitation electrode (10);
**characterized by**
(c) supplementing the liquefied polymer with a charge control agent having minimal or no chemical interaction with the liquefied polymer;
(d) charging said liquefied polymer to a first electrical potential relative to said precipitation electrode;
(e) supplying and operating an aerosol generator to supply an aerosol to said precipitation electrode at a second electrical potential difference from said precipitation electrode opposite in sign to said first electrical potential difference; and
(f) forming a surface on said liquefied polymer of sufficiently high curvature to cause at least one jet of said liquefied polymer to be drawn to said precipitation electrode by said first electrical potential difference, thereby forming the unwoven fiber structure capable of filtering out 99.97 % of 0.3 µm particulates in air flowing at 5 cm/s (sec) on said precipitation electrode.

15. The method of claim 14, wherein charging said liquefied polymer to said first electrical potential relative to said precipitation electrode is followed by recharging said liquefied polymer to a second electrical potential relative to said precipitation electrode, said second electrical potential is similar in magnitude, yet opposite in sign with respect to said first electrical potential.

16. The method of claim 14, wherein said liquefying is effected by dissolving the polymer in a solvent, thereby creating a polymer solution.

17. The method of claim 16, further comprising the step of:
(g) providing vapors of said solvent proximate to said surface of high curvature.

18. The method of claim 14, wherein said charge control agent is selected from the group consisting of biscationic amides, phenol and uryl sulfide derivatives, metal complex compounds, triphenylmethanes, dimethylmidazole and ethoxytrimethylsians.

19. The method of claim 14, wherein said forming of said surface of high curvature is effected by causing said liquefied polymer to emerge from a nozzle, said surface of high curvature being a meniscus of said liquefied polymer.

20. The method of claim 14, wherein said forming of said surface of high curvature is effected by wetting a protrusion (40) having a tip (42) with said liquefied polymer, said surface of high curvature being a surface of said liquefied polymer adjacent to said tip.

21. The method of claim 14, further comprising the step of:
(h) moving said precipitation electrode so that the unwoven fiber structure is formed on said precipitation electrode as a sheet.

22. The method of claim 14, further comprising the step of:
(i) vibrating said surface of high curvature.

23. The method of claim 22, wherein said vibrating is effected at a frequency between about 5000 Hz and about 30,000 Hz.

24. The method of claim 14, further comprising the steps of:
(j) charging a filler powder to a second electrical potential relative to said collection surface, said second electrical potential being opposite in sign to said first electrical potential, thereby creating a charged filler powder; and
(k) exposing the unwoven fiber structure on said precipitation electrode to said charged powder, thereby attracting said charged filler powder to the unwoven fiber structure.

25. The method of claim 24, wherein said liquefied polymer is charged negatively relative to said precipitation electrode and wherein said charged powder is charged positively relative to said precipitation electrode.

26. The method of claim 14, further comprising the step of:
(1) supplementing the liquefied polymer with an additive selected from the group consisting of a viscosity reducing additive, a conductivity regulating additive and a fiber surface tension regulating additive.

27. The method of claim 26, wherein said viscosity reducing additive is polyoxyalkylein, said conductivity regulating additive is an amine salt and said fiber surface tension regulating additive is a surfactant.

## Patentansprüche

1. Vorrichtung zum Überführen eines verflüssigten Polymers in eine Faserstruktur, umfassend:
(a) eine Niederschlagselektrode (10) und eine Hochspannungsquelle,
**gekennzeichnet durch**
(b) einen ersten Mechanismus (21) zum Laden des verflüssigten Polymers zu einem ersten elektrischen Potential in Bezug auf die Niederschlagselektrode, umfassend in Kombination:
(i) die Hochspannungsquelle (4);
(ii) eine Vorrichtung (1) zum Mischen des verflüssigten Polymers mit einem Ladungsregulierungsmittel mit einer minimalen oder keiner chemischen Wechselwirkung mit dem verflüssigten Polymer;
und
(c) einen zweiten Mechanismus (5,6) zum Bilden einer Oberfläche auf dem verflüssigten Polymer mit ausreichend starker Wölbung zum Bewirken dessen, dass mindestens ein Strahl des verflüssigten Polymers **durch** das erste elektrische Potential zu der Niederschlagelektrode gezogen wird;
wobei der erste und der zweite Mechanismus so aufgebaut sind, dass, wenn mehrere Fasern auf der Niederschlagselektrode abgeschieden sind, eine hoch wirksame Luftvliesfaserstruktur erhältlich ist, die mindestens 99,97 % Teilchen mit 0,3 µm in einem Luftstrom mit 5 cm/s ausfiltern kann, **dadurch gekennzeichnet, dass** sie ferner
(d) einen Aerosolbildner umfasst, der zum Zuführen eines Aerosols zu der Niederschlagselektrode mit einem zweiten elektrischen Potentialunterschied von der Niederschlagselektrode mit umgekehrten Zeichen zum ersten elektrischen Potentialunterschied verwendbar ist.

2. Vorrichtung nach Anspruch 1, wobei der erste Mechanismus zum Laden des verflüssigten Polymers zu einem ersten elektrischen Potential in Bezug auf die Niederschlagselektrode ferner folgendes einschließt:
(iii) eine Quelle (110) aus ionisierter Luft, die in Kontakt mit dem verflüssigten Polymer ist.

3. Vorrichtung nach Anspruch 1, wobei der zweite Mechanismus durch mindestens ein rotierendes Rad (30, 140) mit einem Radkranz (38, 148), der mit mehreren Vorsprüngen (40, 150) gebildet ist, betrieben wird.

4. Vorrichtung nach Anspruch 3, wobei jeder der Vorsprünge mit einem Aufnahmehohlraum (151) für das verflüssigte Polymer gebildet ist.

5. Vorrichtung nach Anspruch 3, wobei jedes mindestens eine Rad in Bezug auf die Niederschlagselektrode geneigt ist.

6. Vorrichtung nach Anspruch 3, wobei jedes mindestens eine Rad einen dielektrischen Kern (162) einschließt.

7. Vorrichtung nach Anspruch 1, wobei die Niederschlagselektrode so funktioniert, dass sie sich zum Bilden der Oberfläche mit starker Wölbung hinter den Mechanismus bewegt.

8. Vorrichtung nach Anspruch 7, wobei die Niederschlagselektrode einen Riemen einschließt.

9. Vorrichtung nach Anspruch 1, wobei der Mechanismus zum Bilden der Oberfläche mit starker Wölbung mindestens einen Vorsprung (40) einschließt, der aus einem Material hergestellt ist, das durch das verflüssigte Polymer befeuchtet wird, wobei der mindestens eine Vorsprung eine Spitz (42) einschließt, auf welcher die Oberfläche mit starker Wölbung gebildet wird.

10. Vorrichtung nach Anspruch 9, wobei der mindestens eine Vorsprung auf einem Radkranz eines Rads aufgelegt ist, wobei die Spitze von dem Rad radial nach außen zeigt.

11. Vorrichtung nach Anspruch 9, ferner umfassend:
(e) ein Bad (1, 2, 2') zum Halten des verflüssigten Polymers, wobei der mindestens eine Vorsprung so funktioniert, dass er sich in dem Bad hin und her bewegt, wobei die Strahlen des verflüssigten Polymers am nächsten Zugang des mindestens einen Vorsprungs zu der Niederschlagselektrode gebildet werden.

12. Vorrichtung nach Anspruch 1, wobei der Aerosolbildner folgendes einschließt:
(i) eine Druckkammer (17) und
(ii) eine Abteilung (15) zwischen der Druckkammer und der Niederschlagselektrode, wobei die Druckkammer und die Abteilung miteinander arbeiten, um ein Füllstoffpulver zu verflüssigen, das durch den zweiten elektrischen Potentialunterschied zu der Niederschlagselektrode gezogen wird.

13. Vorrichtung nach Anspruch 11, wobei der Aerosolbildner ein Schlitzsprühelement (18) einschließt.

14. Verfahren zum Formen eines Polymers in eine hoch wirksame teilchenförmige Luftvliesstruktur mit der Vorrichtung nach Anspruch 1, umfassend die folgenden Schritte:
(a) Verflüssigen des Polymers, um dadurch ein verflüssigtes Polymer herzustellen und
(b) Bereitstellen einer Niederschlagselektrode (10),
**gekennzeichnet durch**
(c) Ergänzen des verflüssigten Polymers mit einem Ladungsregulierungsmittel mit einer minimalen oder keiner chemischen Wechselwirkung mit dem verflüssigten Polymer;
(d) Laden des verflüssigten Polymers zu einem ersten elektrischen Potential in Bezug auf die Niederschlagselektrode;
(e) Zuführen und Betreiben eines Aerosolbildners zum Zuführen eines Aerosols zu der Niederschlagselektrode mit einem zweiten elektrischen Potentialunterschied von der Niederschlagselektrode mit umgekehrtem Zeichen zum ersten elektrischen Potentialunterschied; und
(f) Bilden einer Oberfläche auf dem verflüssigten Polymer mit ausreichend starker Wölbung zum Bewirken dessen, dass mindestens ein Strahl des verflüssigten Polymers zu der Niederschlagselektrode **durch** den ersten elektrischen Potentialunterschied gezogen wird, um damit die Vliesfaserstruktur zu bilden, die etwa 99,97 % Teilchen mit 0,3 µm im Luftstrom mit 5 cm/s (Sek.) auf der Niederschlagselektrode ausfiltert.

15. Verfahren nach Anspruch 14, wobei dem Laden des verflüssigten Polymers zu dem ersten elektrischen Potential in Bezug auf die Niederschlagselektrode das Wiederladen des verflüssigten Polymer zu einem zweiten elektrischen Potential in Bezug auf die Niederschlagselektrode folgt, wobei das zweite elektrische Potential in der Größenordnung ähnlich ist, jedoch mit umgekehrtem Zeichen in Bezug auf das erste elektrische Potential vorliegt.

16. Verfahren nach Anspruch 14, wobei das Verflüssigen durch Lösen des Polymers in einem Lösemittel durchgeführt wird, um damit eine Polymerlösung zu bilden.

17. Verfahren nach Anspruch 16, ferner umfassend den folgenden Schritt:
(g) Bereitstellen von Dämpfen des Lösemittels in der Nähe der Oberfläche mit starker Wölbung.

18. Verfahren nach Anspruch 14, wobei das Ladungsregulierungsmittel ausgewählt ist aus der Gruppe, bestehend aus biskationischen Amiden, Phenol und Urylsulfidderivaten, Metallkomplexverbindungen, Triphenylmethanen, Dimethylimidazol und Ethoxytrimethylsilanen.

19. Verfahren nach Anspruch 14, wobei das Bilden der Oberfläche mit starker Wölbung durch Bewirken dessen durchgeführt wird, dass das verflüssigte Polymer von einer Düse austritt, wobei die Oberfläche mit starker Wölbung ein Meniskus des verflüssigten Polymers ist.

20. Verfahren nach Anspruch 14, wobei das Bilden der Oberfläche mit starker Wölbung durch Befeuchten eines Vorsprungs (40) mit einer Spitze (42) mit dem verflüssigten Polymer durchgeführt wird, wobei die Oberfläche mit starker Wölbung eine an die Spitze grenzende Oberfläche des verflüssigten Polymers ist.

21. Verfahren nach Anspruch 14, ferner umfassend den folgenden Schritt:
(h) Bewegen der Niederschlagselektrode so, dass die Vliesfaserstruktur auf der Niederschlagselektrode als Lage gebildet wird.

22. Verfahren nach Anspruch 14, ferner umfassend den folgenden Schritt:
(i) Vibrieren der Oberfläche mit starker Wölbung.

23. Verfahren nach Anspruch 22, wobei das Vibrieren mit einer Frequenz zwischen etwa 5.000 Hz und etwa 30.000 Hz durchgeführt wird.

24. Verfahren nach Anspruch 14, ferner umfassend den folgenden Schritt:
(j) Laden eines Füllstoffpulvers zu einem zweiten elektrischen Potential in Bezug auf die Aufnahmeoberfläche, wobei das zweite elektrische Potential mit umgekehrten Zeichen zu dem ersten elektrischen Potential vorliegt, um damit ein geladenes Füllstoffpulver zu bilden; und
(k) Behandeln der Vliesfaserstruktur auf der Niederschlagselektrode mit dem geladenen Pulver, um damit das geladene Füllstoffpulver von der Vliesfaserstruktur anzuziehen.

25. Verfahren nach Anspruch 24, wobei das verflüssigte Polymer in Bezug auf die Niederschlagselektrode negativ geladen ist und wobei das geladene Pulver in Bezug auf die Niederschlagselektrode positiv geladen ist.

26. Verfahren nach Anspruch 14, ferner umfassend den folgenden Schritt:
(l) Ergänzen des verflüssigten Polymers mit einem Zusatzstoff, ausgewählt aus der Gruppe, bestehend aus einem die Viskosität reduzierenden Zusatzstoff, einem die Leitfähigkeit regulierenden Zusatzstoff und einem die Faseroberflächenspannung regulierenden Zusatzstoff.

27. Verfahren nach Anspruch 26, wobei das die Viskosität reduzierende Mittel Polyoxyalkylen ist, das die Leitfähigkeit regulierende Mittel ein Amin ist und das die Faseroberflächenspannung regulierende Mittel ein oberflächenaktives Mittel ist.

## Revendications

1. Dispositif permettant de transformer un polymère liquéfié en une structure fibreuse, comprenant :
(a) une électrode de précipitation (10) et une source de haute tension,
**caractérisé par**
(b) un premier mécanisme (2') permettant de charger le polymère liquéfié dans un premier potentiel électrique relatif à ladite électrode de précipitation, comprenant en combinaison :
(i) la source (4) de haute tension ;
(ii) un dispositif (1) permettant de mélanger le polymère liquéfié avec un agent de contrôle des charges ayant une interaction chimique minimale ou inexistante avec le polymère liquéfié ;
et
(c) un deuxième mécanisme (5, 6) permettant de former une surface sur ledit polymère liquéfié ayant une courbure suffisamment élevée pour qu'au moins un jet du polymère liquéfié soit extrait par ledit premier potentiel électrique vers ladite électrode de précipitation ;
dans lequel lesdits premier et deuxième mécanismes sont conçus de façon à ce que lorsqu'une pluralité de fibres sont précipitées sur ladite électrode de précipitation, une structure fibreuse non tissée d'air particulaire à haute efficacité, capable de filtrer au moins 99,97 % des particules de 0,3 µm dans un air circulant à 5 cm/s peut être obtenue, **caractérisé en ce qu'**il comprend également
(d) un générateur d'aérosols fonctionnant de façon à fournir un aérosol à ladite électrode de précipitation au niveau d'une deuxième différence de potentiel électrique à partir de ladite électrode de précipitation de signe opposé vers ladite première différence de potentiel électrique.

2. Dispositif selon la revendication 1, dans lequel ledit premier mécanisme permettant de charger le polymère liquéfié dans un premier potentiel électrique relatif à ladite électrode de précipitation comprend également :
(iii) une source (110) d'air ionisé étant en contact avec ledit polymère liquéfié.

3. Dispositif selon la revendication 1, dans lequel le deuxième mécanisme est actionné par au moins une roue pivotante (30, 140) ayant une couronne (38, 148) constituée d'une pluralité de protubérances (40, 150).

4. Dispositif selon la revendication 3, dans lequel chacune desdites protubérances est constituée d'une cavité réceptrice du polymère liquéfié (151).

5. Dispositif selon la revendication 3, dans lequel au moins une desdites roues est inclinée par rapport à ladite électrode de précipitation.

6. Dispositif selon la revendication 3, dans lequel au moins une desdites roues comprend un noyau diélectrique (162).

7. Dispositif selon la revendication 1, dans lequel ladite électrode de précipitation fonctionne de façon à se déplacer devant ledit mécanisme permettant de former ladite surface de courbure élevée.

8. Dispositif selon la revendication 7, dans lequel ladite électrode de précipitation comprend une bande.

9. Dispositif selon la revendication 1, dans lequel ledit mécanisme permettant de former ladite surface de courbure élevée comprend au moins une protubérance (40) constituée en un matériau qui est humidifié par le polymère liquéfié, au moins une desdites protubérances comprenant une pointe (42) sur laquelle ladite surface de courbure élevée est formée.

10. Dispositif selon la revendication 9, dans lequel au moins une desdites protubérances est disposée sur une couronne d'une roue, ladite pointe étant orientée radialement vers l'extérieur de ladite roue.

11. Dispositif selon la revendication 9, comprenant également :
(e) un bain (1, 2, 2') permettant de maintenir le polymère liquéfié, dans lequel au moins une desdites protubérances fonctionne de façon à réaliser un mouvement alternatif au sein dudit bain, lesdits jets du polymère liquéfié étant formés au niveau d'un passage à distance minimale d'au moins une desdites protubérances vers ladite électrode de précipitation.

12. Dispositif selon la revendication 1, dans lequel ledit générateur d'aérosol comprend :
(i) une chambre de pression (17) ; et
(ii) une cloison (15) entre ladite chambre de pression et ladite électrode de précipitation ; ladite chambre de pression et ladite cloison fonctionnant de façon conjointe de façon à fluidiser une poudre de remplissage qui est extraite par ladite deuxième différence de potentiel électrique vers ladite électrode de précipitation.

13. Dispositif selon la revendication 11, dans lequel ledit générateur d'aérosol comprend un pulvérisateur à fente (18).

14. Procédé permettant de transformer un polymère en une structure fibreuse non tissée pour air particulaire à haute efficacité à l'aide du dispositif de la revendication 1, lequel procédé comprend les étapes consistant à :
(a) liquéfier le polymère, ce qui permet ainsi de produire un polymère liquéfié ; et
(b) placer une électrode de précipitation (10) ;
**caractérisé par**
(c) compléter le polymère liquéfié avec un agent de contrôle des charges ayant une interaction chimique minimale ou inexistante avec le polymère liquéfié ;
(d) charger ledit polymère liquéfié dans un premier potentiel électrique relatif à ladite électrode de précipitation ;
(e) fournir et activer un générateur d'aérosol en vue de fournir un aérosol à ladite électrode de précipitation au niveau d'une deuxième différence de potentiel électrique à partir de ladite électrode de précipitation de signe opposé vers ladite première différence de potentiel électrique ; et
(f) former une surface sur ledit polymère liquéfié de courbure suffisamment élevée pour qu'au moins un jet dudit polymère liquéfié soit extrait en direction de ladite électrode de précipitation par ladite première différence de potentiel électrique, formant ainsi la structure fibreuse non tissée capable de filtrer 99,97 % des particules de 0,3 µm dans un air circulant à 5 cm/s (sec) sur ladite électrode de précipitation.

15. Procédé selon la revendication 14, dans lequel la charge dudit polymère liquéfié dans le premier potentiel électrique relatif à ladite électrode de précipitation est suivie d'une recharge dudit polymère liquéfié dans un deuxième potentiel électrique relatif à ladite électrode de précipitation, ledit deuxième potentiel électrique ayant une magnitude identique mais étant de signe opposé par rapport audit premier potentiel électrique.

16. Procédé selon la revendication 14, dans lequel ladite liquéfaction est réalisée en dissolvant le polymère dans un solvant, créant ainsi une solution polymère.

17. Procédé selon la revendication 16, comprenant également l'étape consistant à :
(g) générer des vapeurs dudit solvant à proximité de ladite surface de courbure élevée.

18. Procédé selon la revendication 14, dans lequel ledit agent de contrôle des charges est choisi parmi le groupe comprenant les amides dicationiques, les dérivés du phénol et du sulfure d'aryle, les composés de complexe métallique, les triphénylméthanes, le diméthylimidazole et les éthoxytriméthylsilanes.

19. Procédé selon la revendication 14, dans lequel ladite formation de ladite surface de courbure élevée est réalisée en faisant sortir ledit polymère liquéfié d'une buse, ladite surface de courbure élevée étant un ménisque dudit polymère liquéfié.

20. Procédé selon la revendication 14, dans lequel ladite formation de ladite surface de courbure élevée est réalisée en humidifiant une protubérance (40) ayant une pointe (42) avec ledit polymère liquéfié, ladite surface de courbure élevée étant une surface dudit polymère liquéfié adjacente à ladite pointe.

21. Procédé selon la revendication 14, comprenant également l'étape consistant à :
(h) déplacer ladite électrode de précipitation de façon à ce que la structure fibreuse non tissée soit formée sur ladite électrode de précipitation sous la forme d'une feuille.

22. Procédé selon la revendication 14, comprenant également l'étape consistant à :
(i) faire vibrer ladite surface de courbure élevée.

23. Procédé selon la revendication 22, dans lequel ladite vibration est effectuée à une fréquence comprise entre 5 000 Hz environ et 30 000 Hz environ.

24. Procédé selon la revendication 14, comprenant également les étapes consistant à :
(j) charger une poudre de remplissage dans un deuxième potentiel électrique relatif à ladite surface réceptrice, ledit deuxième potentiel électrique étant de signe opposé audit premier potentiel électrique, créant ainsi une poudre de remplissage chargée ; et
(k) exposer la structure fibreuse non tissée sur ladite électrode de précipitation à ladite poudre chargée, attirant ainsi ladite poudre de remplissage chargée vers la structure fibreuse non tissée.

25. Procédé selon la revendication 24, dans lequel ledit polymère liquéfié est chargé négativement par rapport à ladite électrode de précipitation et dans lequel ladite poudre chargée est chargée positivement par rapport à ladite électrode de précipitation.

26. Procédé selon la revendication 14, comprenant également l'étape consistant à :
(l) compléter le polymère liquéfié avec un additif choisi parmi le groupe comprenant un additif réducteur de viscosité, un additif régulateur de conductivité et un additif régulateur de tension de la surface fibreuse.

27. Procédé selon la revendication 26, dans lequel ledit additif réducteur de viscosité est le polyoxyalkylène, ledit additif régulateur de conductivité est un sel d'amine et ledit additif régulateur de tension de la surface fibreuse est un tensioactif.
